# EUROPEAN PATENT SPECIFICATION

(11) **EP 1 618 150 B1**
(45) Date of publication and mention of the grant of the patent: **13.02.2008**
(21) Application number: 03816666.6
(22) Date of filing: 24.04.2003
(51) Int. Cl.: C08L 23/06, C08L 23/12, C08L 23/16, C08J 9/12, C08J 9/00

(54) **LOW LOSS FOAM COMPOSITION AND CABLE HAVING LOW LOSS FOAM LAYER**
DÄMPFUNGSARME SCHAUMSTOFFZUSAMMENSETZUNG UND KABEL MIT EINER SCHICHT AUS DÄMPFUNGSARMEM SCHAUMSTOFF
COMPOSITION DE MOUSSE A FAIBLE PERTE ET CABLE DOTE D'UNE COUCHE DE MOUSSE A FAIBLE PERTE

(43) Date of publication of application: 25.01.2006
(73) Proprietor: NATIONAL RESEARCH COUNCIL OF CANADA, Ottawa, Ontario K1A OR6 (CA)
(72) Inventor: CHAMPAGNE, Michel, F., St-Thomas d'Aquin, Quebec J0H 2A0 (CA); GENDRON, Richard, Boucherville, Quebec J4B 4H3 (CA); VACHON, Caroline, Laval, Quebec H7S 1T9 (CA); CHOPRA, Vijay, K., Palos Park, IL 60464 (US); NUDD, Hugh, R., Frankfort, IL 60423 (US); RAMPALLI, Sitaram, Orland Park, IL 60467 (US)
(74) Representative: McKechnie, Neil Henry
(86) International application number: PCT/CA2003/000591
(87) International publication number: WO 2004/094526

(56) References cited:
- US-A- 4 104 481
- US-A- 5 462 974
- US-A- 5 993 706
- US-B1- 6 282 778
- US-B1- 6 384 095

## Description

### FIELD OF THE INVENTION

The present invention relates generally to a foam composition and a foam-containing cable. More particularly, the present invention relates to a low loss foam composition and a cable containing the foam for telecommunications applications.

### BACKGROUND OF THE INVENTION

Coaxial telecommunication cables are usually made of a core conductor around which a relatively thick layer of closed-cell foam is extruded. This foam-covered conductor is shielded by a thin metal conductor, which is then sheathed by a thin skin of polymer protecting the whole cable from external aggressions.

The signal transport capabilities of a given cable are related, among other factors, to the loss characteristics of the cable. The loss characteristics of the cable are significantly affected by the dielectric properties of the foam extruded on the core conductor. The most critical factors governing the dielectric properties of the foam are the nature of the polymers used and the density of the cellular structure of the foam.

An effective way of improving telecommunication cable performance is to improve foam dielectric properties. A way to improve foam dielectric properties is to reduce the density of the foam which increases the signal propagation velocity of the cable. In any coaxial cable, achieving the highest practical velocity of signal propagation is advantageous, because this results in the lowest attenuation for a cable with fixed characteristic impedance and fixed size. The characteristic impedance is always set by system requirements, and is therefore fixed. The impedance of the cable has to be the same as that of the equipment items to which it is connected to minimize disrupting signal reflections. Wireless infrastructure systems typically use equipment with a 50 ohms characteristic impedance, while CATV (cable television) systems are usually 75 ohms. Cables are available in various sizes, larger sizes having lower attenuation than smaller sizes, and the lowest attenuation in a given size is advantageous because undesirable signal loss is minimized. In some cases the lower attenuation can allow a smaller cable to be used than would otherwise be possible, which is economically beneficial.

Conventional foams are severely limited in density range, and particularly in the minimum density achievable using the polymers and the blowing agents suitable for the application. It is also important that the cellular structure of the foam is primarily a closed cell structure. Otherwise, there is a risk that open cells would trap water or moisture that would significantly degrade the cable performance. This risk is in addition to the inherently lower mechanical resistance of open cell foam structures as compared to closed cell foam structures.

High density polyethylene (HDPE) is one of the polymers showing the best electrical performance for the application of telecommunication cables. For the purpose of improving material foamability behaviour, low density polyethylene (LDPE) is often added to a HDPE matrix, at some cost to the dielectric performance. The resulting blend is prepared in a molten state in an extruder and a blowing agent is added and dissolved under the high pressure conditions generated in the extruder. The homogeneous mixture of polymer and blowing agent then exits the extruder and once exposed to the atmospheric pressure, phase separation occurs and foaming is initiated.

Common blowing agents include halogenated hydrocarbons, such as chlorofluorocarbons (CFC), hydrochlorofluorocarbons (HCFC), and perfluoro compounds (PFC), as well as gases/volatiles such hydrocarbons (HC), and atmospheric gases such as air, nitrogen and carbon dioxide. Among the possible blowing agents, atmospheric gases, such as carbon dioxide, present many desirable properties. They are readily available, inexpensive, non-toxic, non-corrosive and non-flammable. As a consequence, atmospheric gases, such as carbon dioxide, are widely used for foaming polymers in the cable and wire industry.

However, the inherent physical properties of carbon dioxide impose specific limits on the foaming process. When compared to many other commonly used blowing agents, carbon dioxide has a high vapor pressure at usual processing temperatures, and it also has a relatively low solubility and fast diffusivity in polymers.

In addition, it is noteworthy that semi-crystalline materials, such as polyethylene, are relatively difficult to foam in the low density range. As a result, manufacturing of low density closed-cell polyethylene foam blown from carbon dioxide has not previously been considered possible or practical, although it would be highly desirable for the application of telecommunication cables.

The coaxial cables commonly used for signal transmission include a core containing an inner conductor such as a signal carrying conductor (or wire), a metallic sheath surrounding the core and serving as an outer conductor, and in some instances a protective jacket which surrounds the metallic sheath. Typically, an expanded foam dielectric surrounds the inner conductor and electrically insulates it from the surrounding metallic sheath, filling the space between the inner conductor and the surrounding metallic sheath.

Coaxial cables having an insulating foam layer are described in U.S. Patent 6,282,778 (Fox et al.*)* issued September 4, 2001 and U.S. Patent 6,037,545 (Fox et al.*)* issued March 14, 2000. These documents teach cables incorporating foam compositions formed of a combination of low density polyethylene and high density polyethylene and possessing a density of about 0.22 g/cc (220 kg/m³). In U.S. patent application 2002/00096354 (published July 25, 2002), Chopra et al*.* describe foam densities of 0.17 g/cc in coaxial cables. These patents state that such a density can be achieved, but significantly lower foam densities and methods or materials to accomplish lower densities these are not taught.

Coaxial cables having a variety of layers including a conventional expanded foam dielectric are described, for example, in U.S. Patent No. 6,137,058 (Moe et al.) issued October 24, 2000 and U.S. Patent No. 6,417,454 (Biebuyck) issued July 9, 2002.

Early foam compositions for use in cables are described in U.S. Patent No 4,468,435 (Shimba et al.) issued August 28, 1984, and U.S. Patent No 4,894,488 (Gupta et al.) issued January 16, 1990. More recently, foam compositions have been described in U.S. Patent 6,245,823 (McIntyre et al.), issued June 12, 2001 relating to the use of fluororesin powder or boron nitride as foam nucleators, and U.S. Patent 6,492,596 (Higashikubo et al.), issued December 10, 2002 teaching a mixture of ethane and isobutane as a blowing agent.

Although low density polyethylene foams can be manufactured using hydrocarbons (HCs) or chlorofluorocarbons (CFCs), these chemicals are either flammable or banned by international environmental treaties. It is desirable to reduce and/or eliminate the amount of such chemicals used in foam blowing processes.

It is, therefore, desirable to provide a low loss foam composition for use in cables that can achieve low density in a polyolefin foam using a blowing agent containing an atmospheric gas.

### SUMMARY OF THE INVENTION

It is an object of the present invention to obviate or mitigate at least one disadvantage of previous foam compositions for use in cables.

According to the invention, there is provided a low loss foam composition formed by a process comprising the steps of heating an olefinic polymer to a molten state composition, and extruding the molten state composition under pressure through a die with a blowing agent comprising an atmospheric gas and a co-blowing agent.

Further, the invention provides a process for producing a low loss foam composition comprising the steps of: (a) heating an olefinic polymer to a molten state composition, and (b) extruding said molten state composition under pressure through a die with a blowing agent comprising an atmospheric gas and a co-blowing agent selected from the group consisting of hydrofluorocarbons (HFCs), hydrochlorofluorocarbons (HCFCs), perfluoro compounds (PFCs), and combinations thereof.

Further, the invention provides a low loss cable comprising a signal carrying conductor, a low loss foam composition surrounding the signal carrying conductor, and an outer conductor surrounding the low loss foam composition. The foam comprises an olefinic polymer blown from a molten state under pressure with a blowing agent comprising an atmospheric gas and a co-blowing agent.

A process for forming a low loss cable according to the invention comprises the steps of heating an olefinic polymer to a molten state composition; and extruding the molten state composition under pressure through a die and onto a signal carrying conductor with a blowing agent. The blowing agent comprises an atmospheric gas such as carbon dioxide, and a co-blowing agent such as a hydrofluorocarbon, a hydrochlorofluorocarbon or a perfluoro compound. This process forms a low loss foam encased signal carrying conductor. Further, the low loss foam encased signal carrying conductor is sheathed in an outer conductive material to form a low loss cable.

Other aspects and features of the present invention will become apparent to those ordinarily skilled in the art upon review of the following description of specific embodiments of the invention.

### DETAILED DESCRIPTION

The low loss foam composition of the invention enables the manufacturing of high performance telecommunication cables built from a low density polyethylene foam extruded around the conducting core. By blending an atmospheric gas, such as carbon dioxide, nitrogen or air, with a co-blowing agent such as hydrofluorocarbon (HFC), hydrochlorofluorocarbons (HCFCs), or perfluoro compounds (PFCs), such as HFC-134a, it was found that the density of the resulting polyethylene foam decreased below the minimum values reachable from an atmospheric gas alone (such as carbon dioxide alone) while maintaining a largely closed cell structure.

The signal carrying conductor discussed herein may be any acceptable conductor, for example a wire, tubes, or metal-clad tubes. The signal carrying conductor is generally continuous, as used in coaxial cables. Any conductor capable of carrying a signal which may benefit from being encased in a low loss foam composition may be used as the signal carrying conductor according to the invention.

Atmospheric gases which may be used in a blend with a co-blowing agent include air, carbon dioxide, and nitrogen. By way of reference, the physical properties of carbon dioxide are as follows. The boiling point of CO₂ is -78.45 (°C) or -109.21 (°F), which represents sublimation temperature. The vapor pressure at 21.1 °C (or 70°F) is 5.78 MPa (or 838 psi).

A criterion which may be used to select an appropriate co-blowing agent, such as an HFC, HCFC or PFC, is the boiling point of the agent. Specifically, a co-blowing agent suitable for use in the invention has a boiling point between -65°C and +50°C, while a co-blowing agent with a boiling point of between -30°C and +45°C is preferable. For example, HFC-134a has a boiling temperature of -26°C. Further, blending CO₂ with HCFC-141b (boiling point -10°C) would result in an acceptable foam.

Selection criteria, other than boiling point criteria may be used, provided the end result is that the combination of an atmospheric gas with co-blowing agent allows formation of a low density foam composition.

The physical properties of candidate co-blowing agents can be assessed to determine potential for use with the invention. Such parameters as boiling point or vapor pressure can be assessed. Co-blowing agents with low vapor pressure (high boiling points) provide additional blowing power to an atmospheric gas by adding easily managed vapor pressure. Blowing agents with very low vapor pressure will not bring significant blowing power to the system. Thus a boiling point lower limit of-65 °C and an upper limit of 50 °C were found to be appropriate for co-blowing agents to be used with the invention.

A variety of HFCs are known and available. **Table 1** provides a non-exhaustive list of HFCs, along with a list of physical properties, such as boiling point, vapor pressure and co-blowing agent potential. Those with little to no potential as a co-blowing agent are provided in **Table 1** for comparison purposes only.

| ***Table 1*** | | | | | | |
|---|---|---|---|---|---|---|
| Physical Properties of Hydrofluorocarbons | | | | | | |
| **ASHRAE Denomination** | **Chemical Name** | **Boiling point (°C)** | | **Vapor pressure @** 2**1.1°C- 70°F** | | **Co-Blowing Agent Potential** |
| | | **(°C)** | (**°F)** | **(MPa)** | **(psi)** | |
| R-23 | trifluoromethane | -82.1 | -115.78 | 4.732 | 686 | None |
| R-41 | fluoromethane (methyle fluoride) | -78.35 | -109.03 | 3.71 | 538 | None |
| R-32 | difluoromethane (methylene fluoride) | -53.15 | -63.67 | 1.702 | 247 | Good |
| R-125 | pentafluoroethane | -48.45 | -55.21 | 1.371 | 199 | Good |
| R-134a | 1,1,1,2-tetrafluoroethane | -26.1 | -14.98 | 0.665 | 96 | Excellent |
| R-143a | 1,1,1-trifluoroethane | -47.75 | -53.95 | 1.247 | 181 | Good |
| R-152a | 1,1-difluoroethane | -24.7 | -12.46 | 0.599 | 87 | Excellent |
| R-227ea | 1,1,1,2,3,3,3-heptafluoropropane | -17 | 1.4 | 0.45 | 65 | Excellent |
| R-236fa | 1,1,1,3,3,3-hexafluoropropane | -1.1 | 30.02 | 0.2296 | 33 | Excellent |
| R-245fa | 1,1,1,3,3-pentafluoropropane | 15.3 | 59.54 | 0.124 | 18 | Good |
| R-365mfc | 1,1,1,3,3-pentafluorobutane | 40.2 | 104.36 | 0.047 | 7 | Good |
| R-4310mee | 1,1,1,2,3,4,4,5,5,5-decafluoropentane | 55 | 131 | 0.03 | 4 | Good |

HFC-134a is a commercially available 1,1,1,2-tetrafluoroethane. It is a hydrofluorocarbon (HFC) that offers an alternative to hazardous halogenated fluorocarbons, as it has low toxicity and a zero ozone-depleting potential. Examples of other known hydrofluorocarbons useful with the invention (some of which do not appear in **Table 1)** include difluoromethane (or methylene fluoride); pentafluoroethane; 1,1,1-trifluoroethane; 1,1-difluoroethane; 1,1,1,2,3,3,3-heptafluoropropane; 1,1,1,3,3,3-hexafluoropropane; 1,1,1,3,3-pentafluoropropane; 1,1,1,3,3-pentafluorobutane; 1,1,1,2,3,4,4,5,5,5-decafluoropentane; perfluoromethane; perfluoroethane; ethyl fluoride (HFC-161); 1,1,2-trifluoroethane (HFC-143); 1,1,2,2-tetrafluoroethane (HFC-134); 2,2-difluoropropane (HFC-272fb); 1,1,1-trifluoropropane (HFC-263fb); 1,1,1,2,3,3,3-heptafluoropropane (HFC-227ea). Full details of the halogenated hydrocarbon nomenclature system are specified in ANSI/ASHRAE Standard 34-1992. Other appropriate HFCs can easily be determined by one of skill in the art.

Hydrochlorofluorocarbons (HCFCs) may also be used as co-blowing agents in the invention, provided they have adequate properties. **Table 2** provides a non-exhaustive list of HCFCs that can be used as co-blowing agents with an atmospheric gas. Specifically, the HCFCs 1,1-dichloro-l-fluorc>ethane; 1-chloro-1,1-difluoroethane; chlorodifluoromethane; 1,1-dichloro-2,2,2-trifluoroethane; and 1-chloro-1,2,2,2-tetrafluoroethane may be used. Other HCFCs not appearing in **Table 2** may also be used.

| *Table 2* | | | | | | |
|---|---|---|---|---|---|---|
| Physical Properties of Hydrochlorofluorocarbons (HCFCs) | | | | | | |
| **ASHRAE Denomination** | **Chemical Name** | **Boiling point** | | **Vapor pressure @ 21.1°C- 70°F** | | **Co-Blowing Agent Potential** |
| | | **(°C)** | **(°F)** | **(MPa)** | **(psi)** | |
| R-141b | 1,1- Dichloro - I - fluoroethane | 32 | 89.6 | 0.064 | 9 | Good |
| R-142b | 1- Chloro- 1,1 - difluoroethane | -9.2 | 15.44 | 0.29 | 42 | Excellent |
| R-22 | Chlorodifluoromethane | -40.8 | -41.44 | 0.91 | 132 | Good |
| R-123 | 1,1-Dichloro-2,2,2-trifluoroethane | 27.6 | 81.68 | 0.0763 | 11 | Good |
| R-124 | 1-Chloro-1,2,2,2-tetrafluoroethane | -12 | 10.4 | 0.382 | 55 | Excellent |

Perfluoro Compounds (PFCs) may also be used as co-blowing agents in the invention, provided they have adequate properties. **Table 3** provides a non-exhaustive list of PFCs that can be used as co-blowing agents with an atmospheric gas. Specifically, the PFCs octafluoropropane; octafluorocyclobutane and sulfur hexafluoride may be used. Other PFCs not appearing in **Table 3** may also be used. The PFCs with little to no potential as a co-btowing agent are provided in **Table 3** for comparison purposes only.

| ***Table 3*** | | | | | | |
|---|---|---|---|---|---|---|
| Physical Properties of Perfluoro Compounds (PFCs) | | | | | | |
| **ASHRAE Denomination** | **Chemical Name** | **Boiling point** | | **Vapor pressure @ 21.1°C- 70°F** | | **Co-Blowing Agent Potential** |
| | | **(°C)** | **(°F)** | **(MPa)** | **(psi)** | |
| R-14 | tetrafluoromethane | -128 | -198.4 | N/A | N/A | None |
| R-116 | Hexafluoroethane | -78.2 | -108.76 | 2.97 | 431 | None |
| R-218 | octafluoropropane | -36.7 | -34.06 | 0.69 | 100 | Excellent |
| R-C318 | octafluorocyclobutane | -6 | 21.2 | 0.274 | 40 | Excellent |
| | nitrogen trifluoride | -129.1 | -200.38 | N/A | N/A | None |
| | sulfur hexafluoride (SF₆) | -63.9' | -83.02^{†} | 2.16 | 313 | Good |
| ^{†} denotes sublimation temperature | | | | | | |

Decreasing foam density has the immediate advantage of decreasing the dielectric constant of the polymeric foam, resulting in an increased signal bearing capability of the telecommunication cable, and thus low loss is accomplished. Another advantage of certain embodiments of the invention is a reduced cost because a lower density foam results in less material required for generating a given volume of foam. Additionally, for certain embodiments of the invention, it may be possible to increase line production speed by using a lower density foam. This could occur because a larger expansion for a given mass of polymer could result in a faster production rate for a given polymer mass flow. Thus, the invention can result in both improved cable performance and significant cost reduction.

The invention allows preparation of a low loss telecommunication cable by making use of a low density closed cell polyethylene foam. The blowing agent mixture used according to the invention does not need to be expensive, due to the main ingredient of an atmospheric gas, such as carbon dioxide. Thus, embodiments of the invention are environmentally acceptable, non-flammable and non-toxic. This blowing agent mixture allows significant density reduction while keeping the open cell content at an acceptable level.

The blowing agent mixture includes an atmospheric gas, such as carbon dioxide, in combination with a co-blowing agent, such as HFC-134a. This can be done at any desirable ratio, and preferably so that the amount of co-blowing agent (HFC, HCFC or PFC) is present at a level of at least 10% of the mixture. Further, a specific embodiment of the invention allows the blowing agent to have a ratio ranging from about 3:1 to 1:3 of atmospheric gas to co-blowing agent (such as CO₂ : HFC-134a). Other agents, such as conventional blowing agents may be added to the mixture.

The resulting density of foam may range from 85 kg/m³ to 120 kg/m³. Of course, lower densities may be achieved with particular combinations of conditions. Additionally, higher densities can be achieved if desired, by adjusting conditions as required. Advantageously, the resulting open cell content is observed to be at low levels, such as from 0% to 15%.

A typical cell size distribution may range from 100 to 1000 µm, or optionally may fall within the range of from 400 to 500 µm.

A cable having this low loss foam incorporated into it can be formed according to conventional methods for cable formation, with the exception that the inventive low loss foam is blown into the cable in the place of a conventional foam. Briefly, such a cable can be formed according to the following methodology, with emphasis on formation of the low loss foam. The foam described herein may be used for other types of cables, such as triaxial cables or multiple inner conductors, as would be clear to one of skill in the art. Although the invention is described herein primarily with reference to coaxial cable, the foam may be incorporated into other types of cables as are known in the art, or those cables which are developed and have a requirement for a low density foam.

The polymeric components of closed cell foam dielectric may originate from polymer pellets, generally a polyolefin. These polyolefin pellets are added to an extruder apparatus. Such polymers as polyethylene, polypropylene, and combinations or copolymers of these may be used. A variety of polymer types may be used either alone or in combination. High density polyethylene (HDPE), medium density polyethylene (MDPE), low density polyethylene (LDPE), linear low density polyethylene (LLDPE), or polypropylene may be used either alone or in combination. In an exemplary embodiment, high density polyethylene (HDPE) in combination of with low density polyethylene (LDPE) may be used in any acceptable ratios ranging from 30:70 to 70:30. When used alone, the polymer could be 100% of any one of the above-noted polymers, provided that the desired properties can be achieved. One skilled in the art could easily determine the appropriate properties of the desired polymer to arrive at the appropriate use of individual polymers or mixtures.

A small amount of a nucleating agent is included with the polymer to allow nucleation of gas bubbles during foaming. Conventional nucleating agents such as azobisformamide, azodicarbonamide, sodium carbonate with or without citric acid, talc, calcium carbonate, and mica, may be used in any acceptable concentration. It was found to be advantageous in the present invention to use azobisformamide or azodicarbonamide, but any other nucleating agent as could be determined easily by one of skill in the art could be used with the invention. This may be provided in small concentration through the use of masterbatch pellets or powders containing a blend of a polymer in combination with the nucleating agent, so as to allow homogeneous dispersion of the nucleating agent with the polymer. Herein, masterbatch pellets may be referred to as "MB".

The nucleating agent is combined with the polymer mixture under specific heating and pressure conditions, for example, at a melt pressure of about 400 to 1500 psi, and with a melt temperature of from about 110 to 140 °C to achieve a uniform molten state.

The mixture is then extruded from the molten state by combining an atmospheric gas, such as carbon dioxide, with a co-blowing agent, such as HFC-134a. This composition is extruded through a die of a pre-determined diameter. The diameter may be any acceptable size, depending on the desired cable properties. The extruded foam surrounds a central signal carrying conductor (such as a signal carrying wire), and thus the foam expands around the signal carrying conductor once extruded into an ambient pressure environment.

The foam of the invention expands to produce a low loss closed cell foam dielectric encasing the central signal carrying conductor. The appropriate outer conductor may then be applied according to any desired process to form a co-axial cable.

### Comparative Examples 1 to 4

### Extrusion of a HDPE/LDPE Foam Composition with 100% Carbon Dioxide

Comparative Examples 1-4 show the foam properties obtained by extrusion foaming a 60:38 HDPE/LDPE mixture blown using carbon dioxide alone. Blends were nucleated using azodicarbonamide added to the blend as a concentrated mixture, according to standard practice.

**Table 4** shows data for Examples 1- 4. These data illustrate that when carbon dioxide is used alone as a blowing agent, increasing carbon dioxide content over a certain threshold limit (over about 1.4 wt% of Example 3) induces cell wall rupture resulting in severe increase of open cell content leading, ultimately, to foam densification. In these examples, densities of 148 to 223 kg/m³ are achieved, with open cell content below 10%, while above 1.8% wt% carbon dioxide, a high density of 386 kg/m³ is observed, and an unacceptable level of open cell content (50%) is shown.

**Table 4**

| *Parameters and Results for Examples 1 to 4* | | | | |
|---|---|---|---|---|
| Components/Parameters | Examples | | | |
| | 1 | 2 | 3 | 4 |
| HDPE (phr) (p=953 kg/m³, Ml 6.6) | 60 | 60 | 60 | 60 |
| LDPE (phr) (ρ=923 kg/m³, MI 5.6) | 38 | 38 | 38 | 38 |
| Azodicarbonamide Masterbatch (phr) | 2 | 2 | 2 | 2 |
| CO₂ (wt%) | 0.6 | 0.8 | 1.4 | 1.8 |
| Melt temperature (°C) | 120 | 120 | 120 | 120 |
| Melt pressure (psi) | 1100 | 1000 | 1100 | 1120 |
| Die diameter (mm) | 1.8 | 1.8 | 1.8 | 1.8 |
| Density (kg/m³) | 223 | 182 | 148 | 386 |
| Open cell content (%) | 0 | 2 | 10 | 50 |

### Examples 5 to 7

### Extrusion of a Foam Composition with Carbon Dioxide and HFC-134a in Approximately Equal Ratios

**Table 5** illustrates data from Examples 5-7, which can be compared and contrasted with Comparative Examples 1 to 4. These data demonstrate the enhancement in foam properties manufactured from blends of carbon dioxide and HFC-134a. These specific examples were obtained by keeping a fixed carbon dioxide content while increasing the HFC-134a co-blowing agent concentration. Density of the extruded foam was significantly reduced over the control experiments reported in Comparative Examples 1-4. Notably, in Examples 5 to 7, the open cell content stays low, despite the large density reduction. Significant cable performance improvement was obtained from assemblies incorporating these enhanced foams.

**Table 5**

| *Parameters and Results for Examples 5 to 7* | | | |
|---|---|---|---|
| Components/Parameters | Examples | | |
| | 5 | 6 | 7 |
| HDPE (phr) (p=953 kg/m³, MI 6.6) | 60 | 60 | 60 |
| LDPE (phr) (ρ=923 kg/m³, MI 5.6) | 38 | 38 | 38 |
| Azodicarbonamide Masterbatch (phr) | 2 | 2 | 2 |
| CO₂ (wt%) | 1.4 | 1.4 | 1.4 |
| HFC-134a (wt%) | 1.3 | 1.8 | 2.4 |
| Melt temperature (°C) | 120 | 120 | 120 |
| Melt pressure (psi) | 520 | 500 | 500 |
| Die diameter (mm) | 4 | 4 | 4 |
| Density (kg/m³) | 96 | 94 | 94 |
| Open cell content (%) | 0 | 5 | 10 |

### Examples 8 to 11

### Extrusion of a Foam Composition with Varying Nucleant Type and Die Diameter

**Table 6** shows data for Examples 8-11, which can be compared and contrasted with the data in Comparative Examples 1 to 4. The data in **Table 6** demonstrate the enhancement in foam properties manufactured from blends of carbon dioxide and HFC-134a. These specific examples focus on specimens produced at various CO₂/HFC-134a ratios and content.

Experiments were made using different conditions, such as nucleating agent type and die diameter, and still produced a low density polyethylene foam with very low open cell content. Even in the absence of nucleant (which resulted in a significantly increased cell size), an acceptable density and open cell content was achieved. Additionally, substitution of 0.25% talc for the azodicarbonamide nucleant resulted in an acceptable density and open cell content. Thus, these data illustrate that the foaming process including carbon dioxide and HFC-134a as co-foaming agents is robust and can accommodate significant variations in processing conditions.

**Table 6**

| *Parameters and Results for Examples 8 to 11* | | | | |
|---|---|---|---|---|
| Components/Parameters | Examples | | | |
| | 8 | 9 | 10 | 11 |
| HDPE (phr) (p=953 kg/m³. MI 6.6) | 60 | 60 | 60 | 60 |
| LDPE (phr) (ρ=923 kg/m³, MI 5.6) | 38 | 38 | 39.75 | 40 |
| Nucleant (phr) | 2 (Azo MB) | 2 (Azo MB) | 0.25 (Talc) | None |
| CO₂ (wt%) | 1.7 | 1.6 | 1.4 | 1.4 |
| HFC-134a (wt%) | 1.4 | 1.1 | 1.8 | 0.9 |
| Melt temperature (°C) | 120 | 120 | 120 | 120 |
| Melt pressure (psi) | 480 | 400 | 600 | 1260 |
| Die diameter (mm) | 4 | 4 | 4 | 2 |
| Density (kg/m³) | 92 | 104 | 109 | 106 |
| Open cell content (%) | 5 | 2 | 5 | 5 |

### Examples 12 to 15

### Extrusion of a Foam Composition Under Varying Processing Pressures

**Table 7** shows data from Examples 12-15. These data show the wide pressure and temperature processing window for the improved foaming process described herein. Specifically, a low open cell content was maintained and a low density was accomplished even when melt pressure varied from 500 to 540 psi, and melt temperature varied from 119 to 134 °C.

| *Table 7* | | | | |
|---|---|---|---|---|
| *Parameters and Results for Examples 12 to 15* | | | | |
| Components/ Parameters | Examples | | | |
| | 12 | 13 | 14 | 15 |
| HDPE (wt%) P=953 kg/m³, MI 6.6 | 60 | 60 | 60 | 60 |
| LDPE (wt%) P=923 kg/m³, MI 5.6 | 38 | 38 | 38 | 38 |
| Nucleant (wt%) | 2 | 2 | 2 | 2 |
| | (Azo MB) | (Azo MB) | (Azo MB) | (Azo MB) |
| CO₂ (wt%) | 1.4 | 1.4 | 1.4 | 1.4 |
| HFC-134a (wt%) | 2.4 | 2.4 | . 2.4 | 2.4 |
| Melt temperature (°C) | 134 | 129 | 123 | 119 |
| Melt Pressure (psi) | 500 | 510 | 530 | 540 |
| Die diameter (mm) | 4 | 4 | 4 | 4 |
| Density (kg/m³) | 95 | 89 | 102 | 94 |
| Open cell content (%) | 5 | 2 | 5 | 10 |

### Example 16

### Cable Attenuation for Low Density Foam versus Higher Density Foam

In order to compare cable attenuation in a cable incorporating the foam prepared according to the invention with a cable incorporating a conventional higher density foam, the following comparison was made. The inventive cable used was formed using the inventive foam composition according to **Table 8**, while the standard product was a 1-5/8" foam dielectric cable (available from Andrew Corporation Catalogue 38 p. 517).

**Table 8**

| *Inventive Foam Composition and Characteristics* | |
|---|---|
| Components/Parameters | Example 16 |
| HDPE (wt%) (p=953 kg/m³, MI 6.6) | 65 |
| LDPE (wt%) . (ρ=923 kg/m³, MI 5.6) | 34 |
| Nucleant (wt%) | 1 (Azo MB) |
| CO₂ (wt%) | 1.0 |
| HFC-134a (wt%) | 2.6 |
| Melt temperature (°C) | 122 |
| Melt pressure (psi) | 1500 |
| Die diameter (mm) | 21.1 |
| Density (kg/m³) | 110 |

From the data provided in **Table 9**, it is clear that the use of the inventive foam composition in a cable significantly reduces cable attenuation.

| *Table 9* | | | |
|---|---|---|---|
| Comparison of Attenuation | | | |
| Frequency (MHz) | Attenuation (dB/100 ft) | | |
| | Standard product | inventive foam of Table 8 | % Reduction |
| 500 | 0.496 | 0,470 | 5.2 |
| 1000 | 0.742 | 0.692 | 6.7 |
| 2000 | 1.130 | 1.019 | 9.8 |

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A low loss foam composition having a density of from 85 kg/m³ to 120 kg/m³, said composition being formed by a process comprising the steps of heating an olefinic polymer to a molten state composition, and extruding said molten state composition under pressure through a die with a blowing agent comprising an atmospheric gas and a co-blowing agent;
the olefinic polymer being selected from the group consisting of high density polyethylene (HDPE), medium density polyethylene (MDPE), low density polyethylene (LDPE), linear low density polyethylene (LLDPE), polypropylene, and combinations thereof;
the atmospheric gas being selected from the group consisting of carbon dioxide, nitrogen, air, and combinations thereof; and
the co-blowing agent being selected from the group consisting of hydrofluorocarbons (HFCs), hydrochlorofluorocarbons (HCFCs), perfluoro compounds (PFCs), and combinations thereof.

2. The low loss foam composition according to claim 1 wherein:
(a) said co-blowing agent is selected from the group consisting of 1,1,1,2-tetrafluoroethane (HFC-134a); difluoromethane: pentafluoroethane; 1, 1, 1 - trifluoroethane; 1,1-difluoroethane; 1.1.1.2,3,3.3-heptafluoropropane; 1,1,1,3,3,3-hexafluoropropane; 1,1,1,3,3-pentafluoropropane; 1,1,1,3,3-pentafluorobutane; 1,1,1.2,3,4,4,5,5,5-decafluoropentane; pert1uoromethaoe: perfluoroethane; ethyl fluoride (HFC-161); 1,1,2-trifluoroethane (HFC-143); 1,1,2,2-tetrafluoroethane (HFC-134); 2.2-difluoropropone (FIFC-272fb); 1,1,1-trifluoropropane (HFC-263fb): 1,1,1,2,3,3,3-heptafluoropropane (HFC-227ea); 1,1. dichloro-1-fluoroethene; 1-chloro-1,1-difluoroethane; chlorodifluoromethane; 1,1-dichloro-2,2,2-trifluoroethane; 1-chloto-1,2.2.2-istrafluoroethane; octafluoropropane; octafluorocyclobutane; sulfur hexafluoride; and combinations thereof, and wherein said co-blowing agent preferably Comprises the hydrofluorocarbon HFC-134a;
(b) the co-blowing agent is present in the blowing agent in an amount of at least 10% wt of total blowing agent; and/or
(c) the co-blowing agent and atmospheric gas are present in the blowing agent in a relative ratio of from 3:1 to 1:3.

3. The low loss foam composition according to claim 1 wherein:
(a) the olefinic polymer comprises at least two polymers selected from the group consisting of high density polyethylene (HDPE), medium density polyethylene (MDPE), low density polyethylene (LDPE), linear low density polyethylene (LLDPE), polypropylene, and combinations thereof;
(b) when present, said at least two of HDPE, MDPE, LDPE, LLDPE and polypropylene are each present in the olefinic polymer at a minimum level of 30%;
(c) the olefinic polymer comprises a homopolymer, a copolymer, or a combination of these; and/or
(d) a nucleating agent is heated with said olefinic polymer to said molten state composition, the nucleating agent optionally selected from the group consisting of: azobisformamide, azodicarbonamide, sodium carbonate with or without citric acid, talc, calcium carbonate, mica and combinations thereof; preferably comprising azodicarbonamide.

4. A process for producing a low loss foam composition comprising the steps of:
(a) heating an olefinic polymer to a molten state composition, and
(b) extruding said molten state composition under pressure through a die with a blowing agent comprising an atmospheric gas and a co-blowing agent;
said atmospheric gas being selected from the group consisting of carbon dioxide, nitrogen, air, and combinations thereof; and said co-blowing agent being selected from the group consisting of hydrofluorocarbons (HFCs), hydrochlorofluorocarbons (HCFCs), perfluoro compounds (PFCs), and combinations thereof.

5. A low loss cable comprising:
a signal carrying conductor;
a low loss foam composition surrounding the signal carrying conductor and having a density of from 85 kg/m³ to 120 kg/m³, said foam comprising an olefinic polymer blown from a molten state under pressure with a blowing agent comprising an atmospheric gas and a co-blowing agent; said atmospheric gas being selected from the group consisting of carbon dioxide, nitrogen, air, and combinations thereof; said co-blowing agent being selected from the group consisting of hydrofluorocarbons (HFCs), hydrochlorofluorocarbons (HCFCs), perfluoro compounds (PFCs), and combinations thereof; and
an outer conductor surrounding said low loss foam composition.

6. The low loss cable according to claim 5, wherein:
(a) said co-blowing agent is selected from the group consisting of 1,1,1,2-tetrafluoroethane (HFC-134a); difluoromethane; pentafluoroethane; 1,1,1-trifluoroethane; 1,1-difluoroethane; 1,1,1,2,3,3,3-heptafluoropropane; 1,1,1,3,3,3-hexafluoropropane; 1,1,1,3,3-pentafluoropropane; 1,1,1,3,3-pentafluorobutane; 1,1,1,2,3,4,4,5,5,5-decafluoropentane; perfluoromethane; perfluoroethane; ethyl fluoride (HFC-161); 1,1,2-trifluoroethane (HFC-143); 1,1,2,2-tetrafluoroethane (HFC-134); 2,2-difluoropropane (HFC-272fb); 1,1,1-trifluoropropane (HFC-263fb); 1,1,1,2,3,3,3-heptafluoropropane (HFC-227ea); 1,1-dichloro-i-fluoroethane; 1-chloro-1.1-difluoroethanc; chlorodifluoromethane; 1,1-dichloro-2,2,2-trifluoroethane; 1-chloro-1,2..2,2-tetrafluoroethane: octafluoropropane; octafluorocyclobutane; sulfur hexafluoride; and combinations thereof: and wherein said co-blowing agent preferably comprises the hydrofluorocarbon HFC-134a:
(b) the co-blowing agent is present in the blowing agent in an amount of at least 10% wt of total blowing agents and/or
(c) the co-blowing agent and atmospheric gas are present in the blowing agent in a relative ratio of from 3:1 to 1:3.

7. The low loss cable according to claim 5 wherein:
(a) the olefinic polymer is selected from the group consisting of high density polyethylene (HDPE), medium density polyethylene (MDPE), low density polyethylene (LDPE), linear low density polyethylene (LLDPE), polypropylene, and combinations thereof;
(b) the olefinic polymer comprises at least two polymers selected from the group consisting of high density polyethylene (HDPE), medium density polyethylene (MDPE), low density polyethylene (LDPE), linear low density polyethylene (LLDPE), and polypropylene;
(c) when present, said at least two of HDPE. MDPE, LDPE, LLDPE and polypropylene are each present in the olefinic polymer at a minimum level of 30%;
(d) the olefinic polymer comprises a homopolymer, a copolymer, or a combination of these; and/or
(e) a nucleating agent is heated with said olefinic polymer in said molten state, the nucleating agent optionally selected from the group consisting of: azobisformamide, azodicarbonamide, sodium carbonate with or without citric acid, talc, calcium carbonate, mica and combinations thereof; preferably comprising azodicarbonamide.

8. A process for forming a low loss cable comprising the steps of:
(a) heating an olefinic polymer to a molten state composition;
(b) extruding said molten state composition under pressure through a die and onto a signal carrying conductor with a blowing agent comprising an atmospheric gas and a co-blowing agent to form a low loss foam encased signal carrying conductor; said co-blowing agent being selected from the group consisting of hydrofluorocarbons (HFCs), hydrochlorofluorocarbons (HCFCs), perfluoro compounds (PFCs), and combinations thereof; said atmospheric gas being selected from the group consisting of carbon dioxide, nitrogen, air and combinations thereof; and
(c) sheathing said low loss foam encased signal carrying conductor in a conducting material to form a low loss cable.

9. The process according to claim 8 wherein
(a) said co-blowing agent is selected from the group consisting of 1,1,1.2-tctrafluoroethanc (HFC-134a); difluoromethane; pentafluoroethane; 1,1,1-trifluoroethane; 1,1-difluoroethane; 1,1,1,2,3.3,3-heptalluoropropane; 1,1,1,3,3,3-hexafluoropropane; 1.1,1,3,3-pentafluoropropane; 1,1,1,3,3-pentafluorobutane; 1,1,1,2,3,4,4,5,5,5-decafluoropentane; perfluoromethare; perfluoroethane; ethyl fluoride (HFC-161); 1,1,2-trifluoroethane (HFC-143); 1,1,2,2-tetrafluoroethane (HFC-134); 2,2-difluoropropane (HFC-272fb); 1,1,1-trifluoropropane (HFC-263fb); 1.1.1.2,3,3,3-heptanuoropropane (HFC-227ea); 1,1-dichloro-1-fluoroethane; 1-chloro-1,1-difluoroethane; chlorodifluoromethane; 1,1-dichloro-2,2,2-trifluoroethane; 1-chloro-1,2,2,2-tetrafluoroethane; octafluoropropane; octafluorocyclobutane; sulfur hexafluoride; and combinations thereof: and/or
(b) the co-blowing agent has a boiling point between -65°C and +50°C, preferably between -30°C and +45°C.

## Patentansprüche

1. Eine verlustarme Schaumstoffmasse mit einer Dichte von 85 kg/m³ bis 120 kg/m³, wobei die besagte Masse in einem Prozess entsteht, der folgende Stufen umfasst: Erhitzung eines olefinischen Polymers bis in den geschmolzenen Zustand der Masse, sowie Extrusion der genannten Masse im geschmolzenen Zustand unter Druck durch eine Düse, mit einem Treibmittel, das ein atmosphärisches Gas und ein Hilfstreibmittel enthält;
wobei das olefinische Polymer ausgewählt wird aus folgender Gruppe: Polyethylen hoher Dichte (HDPE), Polyethylen mittlerer Dichte (MDPE), Polyethylen geringer Dichte (LDPE), linearem Polyethylen geringer Dichte (LLDPE), Polypropylen und Kombinationen davon;
wobei das atmosphärische Gas ausgewählt wird aus folgender Gruppe: Kohlendioxid, Stickstoff, Luft sowie Kombinationen davon; und
wobei das Hilfstreibmittel ausgewählt wird aus folgender Gruppe: Fluorkohlenwasserstoffe (FKWs), Fluorchlorkohlenwasserstoffe (FCKWs), Perfluorverbindungen (PFCs) und Kombinationen davon.

2. Die verlustarme Schaumstoffmasse entsprechend Anspruch 1, bei der:
(a) das genannte Hilfstreibmittel gewählt wird aus der Gruppe von 1,1,1,2-Tetrafluorethan (HFC-134a); Difluormethan; Pentafluorethan; 1,1,1-Trifluorethan; 1,1-Difluorethan; 1,1,1,2,3,3,3-Heptafluorpropan; 1,1,1,3,3,3-Hexafluorpropan; 1,1,1,3,3-Pentafluorpropan; 1,1,1,3,3-Pentafluorbutan; 1,1,1,2,3,4,4,5,5,5-Decafluorpentan; Perfluormethan; Perfluorethan; Ethylfluorid (HFC-161); 1,1,2-Trifluorethan (HFC-143); 1,1,2,2-Tetrafluorethan (HFC-134); 2,2-Difluorpropan (HFC-272fb); 1,1,1-Trifluorpropan (HFC-263fb); 1,1,1,2,3,3,3-Heptafluorpropan (HFC-227ea); 1,1-Dichlor-1-Fluorethan; 1-Chlor-1,1-Difluorethan; Chlordifluormethan; 1,1-Dichlor-2,2,2-Trifluorethan; 1-Chlor-1,2,2,2-Tetrafluorethan; Octafluorpropan; Octafluorcyclobutan; Schwefelhexafluorid, sowie Kombinationen davon, und für die das genannte Hilfstreibmittel vorzugsweise den Fluorkohlenwasserstoff HFC-134a enthält;
(b) das Hilfstreibmittel im Treibmittel zu einem Anteil von mindestens 10% des Gewichtes des Gesamttreibmittels vertreten ist; und/oder
(c) das Hilfstreibmittel und das atmosphärische Gas im Treibmittel in einem relativen Verhältnis von 3:1 bis 1:3 enthalten sind.

3. Die verlustarme Schaumstoffmasse entsprechend Anspruch 1, bei der:
(a) das olefinische Polymer mindestens zwei Polymere umfasst aus der Gruppe von Polyethylen hoher Dichte (HDPE), Polyethylen mittlerer Dichte (MDPE), Polyethylen geringer Dichte (LDPE), linearem Polyethylen geringer Dichte (LLDPE), Polypropylen und Kombinationen davon;
(b) bei Vorhandensein von mindestens zwei der genannten HDPE, MDPE, LDPE, LLDPE und Polypropylene diese jeweils zu mindestens 30% in dem olefinischen Polymer vertreten sind;
(c) das olefinische Polymer ein Homopolymer, ein Copolymer oder eine Kombination aus diesen enthält; und/oder
(d) ein Keimbildner mit dem genannten olefinischen Polymer zu der genannten Masse im geschmolzenen Zustand erhitzt wird, wobei der Keimbildner optional gewählt wird aus einer Gruppe bestehend aus Azobisformamid, Azodicarbonamid, Natriumkarbonat mit oder ohne Zitronensäure, Talk, Kalziumkarbonat, Glimmer und Kombinationen hiervon, vorzugsweise Azodicarbonamid umfassend.

4. Ein Prozess zur Herstellung einer verlustarmen Schaumstoffmasse, die folgenden Schritte umfassend:
(a) Erhitzung eines olefinischen Polymers zu einer Masse im geschmolzenen Zustand, und
(b) Extrusion der genannten Masse im geschmolzenen Zustand unter Druck durch eine Düse, mit einem Treibmittel, umfassend ein atmosphärisches Gas und ein Hilfstreibmittel;
wobei das genannte atmosphärische Gas gewählt wird aus der Gruppe bestehend aus Kohlendioxid, Stickstoff, Luft und Kombinationen hiervon, und das genannte Hilfstreibmittel gewählt wird aus einer Gruppe bestehend aus Fluorkohlenwasserstoffen (FKWs), Fluorchlorkohlenwasserstoffen (FCKWs), Perfluorverbindungen (PFCs) und Kombinationen hiervon.

5. Ein verlustarmes Kabel, umfassend:
einen Signalleiter;
eine den Signalleiter umgebende, verlustarme Schaumstoffmasse mit einer Dichte von 85 kg/m³ bis 120 kg/m³, wobei der genannte Schaumstoff ein olefinisches Polymer umfasst, aufgeschäumt aus einer Masse in geschmolzenem Zustand unter Druck, mit einem Treibmittel, umfassend ein atmosphärisches Gas und ein Hilfstreibmittel, wobei das genannte atmosphärische Gas gewählt wird aus der Gruppe bestehend aus Kohlendioxid, Stickstoff, Luft und Kombinationen hiervon, und wobei das genannte Hilfstreibmittel gewählt wird aus der Gruppe bestehend aus Fluorkohlenwasserstoffen (FKWs), Fluorchlorkohlenwasserstoffen (FCKWs), Perfluorverbindungen (PFCs) und Kombinationen hiervon, und
einen Außenleiter, der die genannte, verlustarme Schaumstoffmasse umgibt.

6. Das verlustarme Kabel entsprechend Anspruch 5, bei dem:
(a) das genannte Hilfstreibmittel gewählt wird aus der Gruppe von 1,1,1,2-Tetrafluorethan (HFC-134a); Difluormethan; Pentafluorethan; 1,1,1-Trifluorethan; 1,1-Difluorethan; 1,1,1,2,3,3,3-Heptafluorpropan; 1,1,1,3,3,3-Hexafluorpropan; 1,1,1,3,3-Pentafluorpropan; 1,1,1,3,3-Pentafluorbutan; 1,1,1,2,3,4,4,5,5,5-Decafluorpentan; Perfluormethan; Perfluorethan; Ethylfluorid (HFC-161); 1,1,2-Trifluorethan (HFC-143); 1,1,2,2-Tetrafluorethan (HFC-134); 2,2-Difluorpropan (HFC-272fb); 1,1,1-Trifluorpropan (HFC-263fb); 1,1,1,2,3,3,3-Heptafluorpropan (HFC-227ea); 1,1-Dichlor-1-Fluorethan; 1-Chlor-1,1-Difluorethan; Chlordifluormethan; 1,1-Dichlor-2,2,2-Trifluorethan; 1-Chlor-1,2,2,2-Tetrafluorethan; Octafluorpropan; Octafluorcyclobutan; Schwefelhexafluorid, sowie Kombinationen davon, und bei dem das genannte Hilfstreibmittel vorzugsweise den Fluorkohlenwasserstoff HFC-134a enthält;
(b) das Hilfstreibmittel im Treibmittel zu einem Anteil von mindestens 10% des Gewichtes des Gesamttreibmittels vertreten ist; und/oder
(c) das Hilfstreibmittel und das atmosphärische Gas im Treibmittel in einem relativen Verhältnis von 3:1 bis 1:3 enthalten sind.

7. Das verlustarme Kabel entsprechend Anspruch 5, bei dem:
(a) das olefinische Polymer aus einer Gruppe gewählt wird bestehend aus Polyethylen hoher Dichte (HDPE), Polyethylen mittlerer Dichte (MDPE), Polyethylen geringer Dichte (LDPE), linearem Polyethylen geringer Dichte (LLDPE), Polypropylen und Kombinationen davon;
(b) das olefinische Polymer mindestens zwei Polymere umfasst aus der Gruppe von Polyethylen hoher Dichte (HDPE), Polyethylen mittlerer Dichte (MDPE), Polyethylen geringer Dichte (LDPE), linearem Polyethylen geringer Dichte (LLDPE) sowie Polypropylen;
(c) bei Vorhandensein mindestens zwei der genannten HDPE, MDPE, LDPE, LLDPE und Polypropylen diese jeweils zu mindestens 30% in dem olefinischen Polymer vertreten sind;
(d) das olefinische Polymer ein Homopolymer, ein Copolymer oder eine Kombination aus diesen enthält; und/oder
(e) ein Keimbildner mit dem genannten olefinischen Polymer zu der genannten Masse im geschmolzenen Zustand erhitzt wird, wobei der Keimbildner optional gewählt wird aus der Gruppe bestehend aus Azobisformamid, Azodicarbonamid, Natriumkarbonat mit oder ohne Zitronensäure, Talk, Kalziumkarbonat, Glimmer und Kombinationen hiervon, vorzugsweise Azodicarbonamid umfassend.

8. Ein Prozess zur Herstellung eines verlustarmen Kabels, die folgenden Schritte umfassend:
(a) Erhitzung eines olefinischen Polymers zu einer Masse im geschmolzenen Zustand;
(b) Extrusion der genannten geschmolzenen Masse unter Druck durch eine Düse und auf einen Signalleiter, mit einem Treibmittel, umfassend ein atmosphärisches Gas und ein Hilfstreibmittel, zur Herstellung eines verlustarmen, schaumstoffummantelten Signalleiters, wobei das genannte Hilfstreibmittel gewählt wird aus der Gruppe bestehend aus Fluorkohlenwasserstoffen (FKWs), Fluorchlorkohlenwasserstoffen (FCKWs), Perfluorverbindungen (PFCs) und Kombinationen hiervon, und wobei das genannte atmosphärische Gas gewählt wird aus der Gruppe bestehend aus Kohlendioxid, Stickstoff, Luft und Kombinationen hiervon, und
(c) Umhüllung des genannten, verlustarmen, schaumstoffummantelten Signalleiters mit einem leitenden Material zur Herstellung eines verlustarmen Kabels.

9. Der Prozess entsprechend Anspruch 8, bei dem:
(a) das genannte Hilfstreibmittel gewählt wird aus der Gruppe bestehend aus 1,1,1,2-Tetrafluorethan (HFC-134a); Difluormethan; Pentafluorethan; 1,1,1-Trifluorethan; 1,1-Difluorethan; 1,1,1,2,3,3,3-Heptafluorpropan; 1,1,1,3,3,3-Hexafluorpropan; 1,1,1,3,3-Pentafluorpropan; 1,1,1,3,3-Pentafluorbutan; 1,1,1,2,3,4,4,5,5,5-Decafluorpentan; Perfluormethan; Perfluorethan; Ethylfluorid (HFC-161); 1,1,2-Trifluorethan (HFC-143); 1,1,2,2-Tetrafluorethan (HFC-134); 2,2-Difluorpropan (HFC-272fb); 1,1,1-Trifluorpropan (HFC-263fb); 1,1,1,2,3,3,3-Heptafluorpropan (HFC-227ea); 1,1-Dichlor-1-Fluorethan; 1-Chlor-1,1-Difluorethan; Chlordifluormethan; 1,1-Dichlor-2,2,2-Trifluorethan; 1-Chlor-1,2,2,2-Tetrafluorethan; Octafluorpropan; Octafluorcyclobutan; Schwefelhexafluorid, sowie Kombinationen davon, und/oder
(b) das Hilfstreibmittel einen Siedepunkt zwischen -65°C und +50°C, vorzugsweise zwischen -30°C und +45°C aufweist.

## Revendications

1. Composition de mousse à faible perte d'une densité comprise entre 85 kg/m³ et 120 kg/m³, ladite composition étant produite par un procédé comprenant les étapes suivantes :
chauffage d'un polymère oléfinique jusqu'à obtention d'une composition à l'état fondu, et extrusion de ladite composition à l'état fondu sous pression dans une filière avec un gonflant comprenant un gaz atmosphérique et un cogonflant ;
le polymère oléfinique étant sélectionné dans le groupe comprenant le polyéthylène haute densité (PEhd), le polyéthylène moyenne densité (PEmd), le polyéthylène basse densité (PEbd), le polyéthylène basse densité linéaire (PEbdl), le polypropylène et leurs combinaisons ;
le gaz atmosphérique étant sélectionné dans le groupe comprenant le dioxyde de carbone, l'azote, l'air et leurs combinaisons ; et
le cogonflant étant sélectionné dans le groupe comprenant les hydrofluorocarbones (HFC), les hydrochlorofluorocarbones (HCFC), les composés perfluoro (CPF) et leurs combinaisons.

2. Composition de mousse à faible perte suivant la revendication 1 dans laquelle :
(a) ledit cogonflant est sélectionné dans le groupe comprenant le 1,1,1,2-tétrafluoroéthane (HFC-134a), le difluorométhane, le pentafluoroéthane, le 1,1,1-trifluoroéthane, le 1,1-difluoroéthane, le 1,1,1,2,3,3,3-heptafluororpropane, le 1,1,1,3,3,3-hexafluoropropane, le 1,1,1,3,3-pentafluoropropane, le 1,1,1,3,3-pentafluorobutane, le 1,1,1,2,3,4,4,5,5,5-décafluoropentane, le perfluorométhane, le perfluoroéthane, le fluorure d'éthyle (HFC-161), le 1,1,2-trifluoroéthane (HFC-143), le 1,1,2,2-tétrafluoroéthane (HFC-134), le 2,2-difluoropropane (HFC-272fb), le 1,1,1-trifluoropropane (HFC-263fb), le 1,1,1,2,3,3,3-heptafluoropropane (HFC-227ea), le 1,1-dichloro-1-fluoroéthane, le 1-chloro-1,1-difluoroéthane, le chlorodifluorométhane, le 1,1-dichloro-2,2,2-trifluoroéthane, le 1-chloro-1,2,2,2-tétrafluoroéthane, l'octafluoropropane, l'octafluorocyclobutane, l'hexafluorure de soufre et leurs combinaisons ; et dans laquelle ledit cogonflant comprend, de préférence, l'hydrofluorocarbone HFC-134a ;
(b) le cogonflant est présent dans le gonflant dans une proportion d'au moins 10 % en poids du gonflant total ; et/ou
(c) le cogonflant et le gaz atmosphérique sont présents dans le gonflant dans un rapport relatif compris entre 3:1 et 1:3.

3. Composition de mousse à faible perte suivant la revendication 1, dans laquelle :
(a) le polymère oléfinique comprend au moins deux polymères sélectionnés dans le groupe comprenant le polyéthylène haute densité (PEhd), le polyéthylène moyenne densité (PEmd), le polyéthylène basse densité (PEbd), le polyéthylène basse densité linéaire (PEbdl), le polypropylène et leurs combinaisons ;
(b) lorsqu'ils sont présents, lesdits deux polymères parmi le PEhd, le PEmd, le PEbd, le PEbdl et le polypropylène sont chacun présents dans le polymère oléfinique dans une proportion minimale de 30 % ;
(c) le polymère oléfinique comprend un homopolymère, un copolymère ou leur combinaison ; et/ou
(d) un agent de nucléation est chauffé avec ledit polymère oléfinique jusqu'à obtention d'une composition à l'état fondu, l'agent de nucléation étant, de manière facultative, sélectionné dans le groupe comprenant : l'azobisformamide, l'azodicarbonamide, le carbonate de sodium avec ou sans acide citrique, le talc, le carbonate de calcium, le mica et leurs combinaisons, de préférence l'azodicarbonamide.

4. Procédé de production d'une composition de mousse à faible perte comprenant les étapes suivantes .
(a) chauffage d'un polymère oléfinique jusqu'à obtention d'une composition à l'état fondu ; et
(b) extrusion de ladite composition à l'état fondu sous pression dans une filière avec un gonflant comprenant un gaz atmosphérique et un cogonflant ;
ledit gaz atmosphérique étant sélectionné dans le groupe comprenant le dioxyde de carbone, l'azote, l'air et leurs combinaisons ; et ledit cogonflant étant sélectionné dans le groupe comprenant les hydrofluorocarbones (HFC), les hydrochlorofluorocarbones (HCFC), les composés perfluoro (CPF) et leurs combinaisons.

5. Câble à perte réduite comprenant :
un conducteur porteur de signaux ;
une composition de mousse à faible perte entourant le conducteur porteur de signaux et d'une densité comprise entre 85 kg/m³ et 120 kg/m³, ladite mousse comprenant un polymère oléfinique gonflé à partir d'un état fondu sous pression avec un gonflant comprenant un gaz atmosphérique et un cogonflant ; ledit gaz atmosphérique étant sélectionné dans le groupe comprenant le dioxyde de carbone, l'azote, l'air et leurs combinaisons ; et ledit cogonflant étant sélectionné dans le groupe comprenant les hydrofluorocarbones (HFC), les hydrochlorofluorocarbones (HCFC), les composés perfluoro (CPF) et leurs combinaisons, et
un conducteur externe entourant ladite composition de mousse à faible perte.

6. Câble à faible perte suivant la revendication 5, dans lequel :
(a) ledit cogonflant est sélectionné dans le groupe comprenant le 1,1,1,2-tétrafluoroéthane (HFC-134a), le difluorométhane, le pentafluoroéthane, le 1,1,1-trifluoroéthane, le 1,1-difluoroéthane, le 1,1,1,2,3,3,3-heptafluororpropane, le 1,1,1,3,3,3-hexafluoropropane, le 1,1,1,3,3-pentafluoropropane, le 1,1,1,3,3-pentafluorobutane, le 1,1,1,2,3,4,4,5,5,5-décafluoropentane, le perfluorométhane, le perfluoroéthane, le fluorure d'éthyle (HFC-161), le 1,1,2-trifluoroéthane (HFC-143), le 1,1,2,2-tétrafluoroéthane (HFC-134), le 2,2-difluoropropane (HFC-272fb), le 1,1,1-trifluoropropane (HFC-263fb), le 1,1,1,2,3,3,3-heptafluoropropane (HFC-227ea), le 1,1-dichloro-1-fluoroéthane, le 1-chloro-1,1-difluoroéthane, le chlorodifluorométhane, le 1,1-dichloro-2,2,2-trifluoroéthane, le 1-chloro-1,2,2,2-tétrafluoroéthane, l'octafluoropropane, l'octafluorocyclobutane, l'hexafluorure de soufre et leurs combinaisons ; et dans laquelle ledit cogonflant comprend, de préférence, l'hydrofluorocarbone HFC-134a ;
(b) le cogonflant est présent dans le gonflant dans une proportion d'au moins 10% de le gonflant total ; et/ou
(c) le cogonflant et le gaz atmosphérique sont présents dans le gonflant dans un rapport relatif compris entre 3:1 et 1:3.

7. Câble à faible perte suivant la revendication 5, dans lequel :
(a) le polymère oléfinique est sélectionné dans le groupe comprenant le polyéthylène haute densité (PEhd), le polyéthylène moyenne densité (PEmd), le polyéthylène basse densité (PEbd), le polyéthylène basse densité linéaire (PEbdl), le polypropylène et leurs combinaisons ;
(b) le polymère oléfinique comprend au moins deux polymères sélectionnés dans le groupe comprenant le polyéthylène haute densité (PEhd), le polyéthylène moyenne densité (PEmd), le polyéthylène basse densité (PEbd), le polyéthylène basse densité linéaire (PEbdl) et le polypropylène ;
(c) lorsqu'ils sont présents, lesdits deux polymères parmi le PEhd, le PEmd, le PEbd, le PEbdl et le polypropylène sont chacun présents dans le polymère oléfinique dans une proportion minimale de 30 % ;
(d) le polymère oléfinique comprend un homopolymère, un copolymère ou leur combinaison ; et/ou
(e) un agent de nucléation est chauffé avec ledit polymère oléfinique jusqu'à obtention d'une composition à l'état fondu, l'agent de nucléation étant, de manière facultative, sélectionné dans le groupe comprenant : l'azobisformamide, l'azodicarbonamide, le carbonate de sodium avec ou sans acide citrique, le talc, le carbonate de calcium, le mica et leurs combinaisons, de préférence l'azodicarbonamide.

8. Procédé de production d'un câble à faible perte comprenant les étapes suivantes :
(a) chauffage d'un polymère oléfinique jusqu'à obtention d'une composition à l'état fondu ;
(b) extrusion de ladite composition à l'état fondu sous pression dans une filière et sur un conducteur porteur de signaux avec un gonflant comprenant un gaz atmosphérique et un cogonflant afin de former un conducteur porteur de signaux enrobé dans une mousse à faible perte ; ledit cogonflant étant sélectionné dans le groupe comprenant les hydrofluorocarbones (HFC), les hydrochlorofluorocarbones (HCFC), les composés perfluoro (CPF) et leurs combinaisons ; ledit gaz atmosphérique étant sélectionné dans le groupe comprenant le dioxyde de carbone, l'azote, l'air et leurs combinaisons ; et
(c) gainage dudit conducteur porteur de signaux enrobé dans une mousse à faible perte dans un matériau conducteur afin de former un câble à faible perte.

9. Procédé suivant la revendication 8, dans lequel :
(a) ledit cogonflant est sélectionné dans le groupe comprenant le 1,1,1,2.-tétrafluoroéthane (HFC-134a), le difluorométhane, le pentafluoroéthane, le 1,1,1-trifluoroéthane, le 1,1-difluoroéthane, le 1,1,1,2,3,3,3-heptafluororpropane, le 1,1,1,3,3,3-hexafluoropropane, le 1,1,1,3,3-pentafluoropropane, le 1,1,1,3,3-pentafluorobutane, le 1,1,1,2,3,4,4,5,5,5-décafluoropentane, le perfluorométhane, le perfluoroéthane, le fluorure d'éthyle (HFC-161), le 1,1,2-trifluoroéthane (HFC-143), le 1,1,2,2-tétrafluoroéthane (HFC-134), le 2,2-difluoropropane (HFC-272fb), le 1,1,1-trifluoropropane (HFC-263fb), le 1,1,1,2,3,3,3-heptafluoropropane (HFC-227ea), le 1,1-dichloro-1-fluoroéthane, le 1-chloro-1,1-difluoroéthane, le chlorodifluorométhane, le 1,1-dichloro-2,2,2-trifluoroéthane, le 1-chloro-1,2,2,2-tétrafluoroéthane, l'octafluoropropane, l'octafluorocyclobutane, l'hexafluorure de soufre et leurs combinaisons ; et/ou
(b) le cogonflant présente un point d'ébullition compris entre -65 °C et +50 °C, de préférence entre -30 °C et +45 °C.
